# EUROPEAN PATENT APPLICATION

(11) **EP 0 785 535 A1**
(43) Date of publication of application: **23.07.1997**
(21) Application number: 96117057.8
(22) Date of filing: 24.10.1996
(51) Int. Cl.: G08G 1/0968

(54) **Integrated guidance system for vehicles**

(30) Priority: 16.01.1996 JP 4759/96
(71) Applicant: MITSUBISHI DENKI KABUSHIKI KAISHA, Tokyo 100 (JP)
(72) Inventor: Asahi, Nobuo, Chiyoda-ku, Tokyo 100 (JP); Asaga, Yoshiharu, Chiyoda-ku, Tokyo 100 (JP); Mizuguchi, Takehisa, Chiyoda-ku, Tokyo 100 (JP); Tsuchiya, Niro, Chiyoda-ku, Tokyo 100 (JP); Mizushima, Tatsuhiko, Chiyoda-ku, Tokyo 100 (JP)
(74) Representative: Pfenning, Meinig & Partner

(57) **Abstract**

An integrated guidance system integrates and displays useful information from various information providers by a simple operation during travel. During travel the information is collected from various types of information supply servers (7,8,9) connected to a network (6). A navigation server (5) transmits the useful information to a mobile terminal device (2) using radio communication. On a single screen the mobile terminal device (2) displays traffic and town information which are obtained from the navigation server (5) and map information from a secondary memory section (3). Even if the information provider differs, useful information for a user is displayed when travelling in an integrated form by a simple operation.

## Description

### BACKGROUND OF THE INVENTION

### FIELD OF THE INVENTION

This invention relates to an integrated guidance system in which each of a number of information items is integrated and displayed by a simple operation on a mobile terminal device, even though the information provider is different for each of the information concerned items.

### DESCRIPTION OF THE PRIOR ART

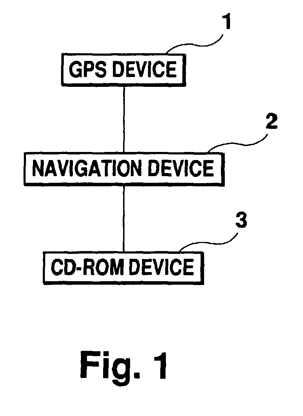

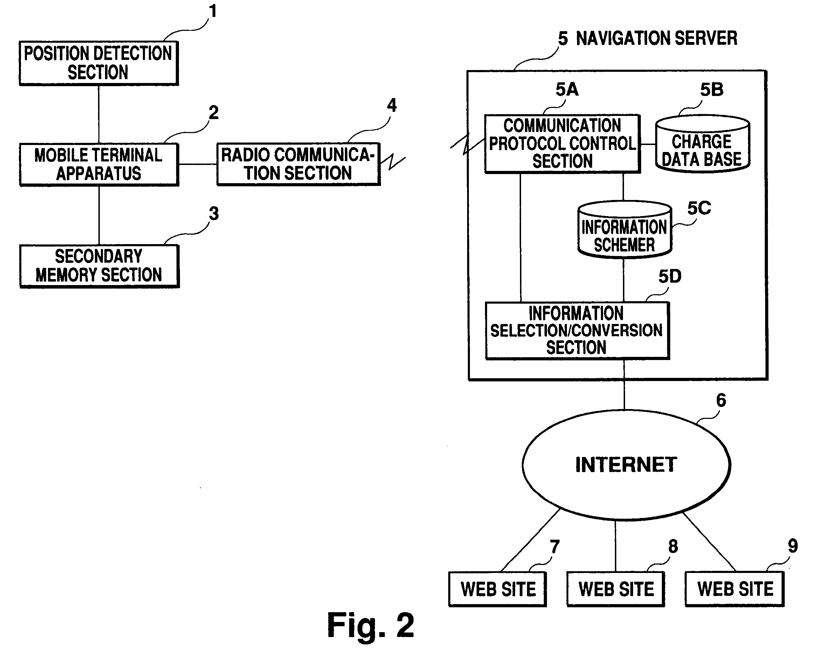

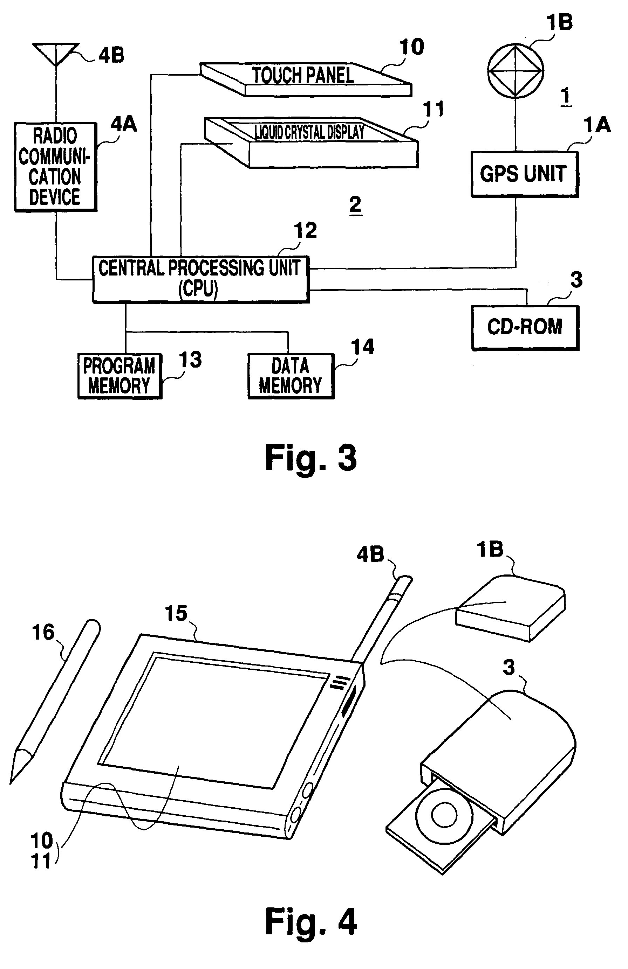

Conventionally, there have been car navigation systems which provide effective information while travelling according to the user's movement. Fig. 1 shows the structure of the prior car navigation system disclosed in, for example, Japanese Patent Laid-Open Publication Hei 5-53506. In the figure, 1 is a GPS (Global Positioning System) device detecting the present position through a signal from a satellite, 2 is a navigation device equipped with a CRT display and an operation switch, etc., is for managing the set up of the user's destination along with displaying the present position and the route to the destination dynamically on the display, 3 is a CD-ROM device which appropriately reads the map information stored in the CD-ROM according to the instruction from the navigation device 2, and transmits the map information to the navigation device 2. Depending on the structure, there may be a car speed sensor, a direction sensor or a travel sensor which uses the earth's magnetism or a gyro in order to correct the error automatically, in addition to the GPS device 1.

In the prior navigation system, the user first registers the destination in advance by operating the navigation device 2 based on map information read from CD-ROM device 3. After registration, information on the present position (longitude/latitude information) is obtained regularly from GPS device 1, and based on that longitude/latitude information, the map information of the vicinity of the present position is read from the CD-ROM device 3, and along with displaying the map information on the display of the car navigation device 2, the present position is displayed, and at intersections, the display of the turning direction is also displayed.

In the prior car navigation system composed like the above, the function of displaying map information supplied from CD-ROM according to position information of the user was achieved. However, traffic information supplied from radio broadcasting etc.; and tour guides etc. supplied as books, are provided individually even though they are information which should be used together, since the media from which they are offered differ. As a result, there was the problem that the user could not make the most of the various information items.

On the other hand, the WWW (World Wide Web) on the internet has come to be used by people other than specialists, and the trend toward integrating large amounts of information such as text, sounds, and images on the WWW is becoming stronger. In reality, these large amounts of information are now in the state where integration is possible on the WWW. However upon integrating these information, it was necessary to solve the problem of billing and the problem of forwarding data while travelling.

### SUMMARY OF THE INVENTION

This invention was made to solve problems similar to the above, and its object is to provide an integrated guidance system which is capable of integrating and displaying useful information by simple operations during travel even though the information comes from various providers. Furthermore, its object is also to provide an integrated guidance system which is capable of effectively solving the problems of billing and data transfer.

In the integrated guidance system of the present invention, the position detection section which detects its own position, the secondary memory section where map information is memorized, and the radio communication section that conducts radio communication are added to the mobile terminal apparatus which is portable during travel. The mobile terminal device reads the corresponding map information from the secondary memory section according to the detection result of the position detection section and displays it on the display section of the mobile terminal apparatus. A number of information supply servers connected to the network provide various guidance information while navigation servers with radio communication control section communicate with the radio communication section of the mobile terminal device while connected to network and the navigation server accesses a number of information supply servers based on communication result between the mobile terminal device. The mobile terminal device collects useful guidance information during travel and sends this to the mobile terminal device which displays this information on the display section integrated with the map information read from secondary memory section.

Therefore, according to this invention, the integrated guidance system is capble of being realized wherein useful information can be displayed during travel in an integrated form through a simple operation even though the information comes from various sources.

According to another aspect of the present invention, the navigation server has a charge data base that saves and totals the usage history per user of the mobile terminal device, and integrally manages billing information instead of the information supply servers.

Therefore, the integrated guidance system is capable of being realized wherein the complicated problem of the user contracting with information supply servers and paying separate fees is solved.

Further, according to another aspect of the present invention, during travel the navigation server filters unnecessary information for the mobile terminal device from the guidance information provided by information supply servers, and sends the minimum necessary amount of communication data to the mobile terminal device.

As a result, the integrated guidance system can be realized which markedly reduces the amount of communication data present when accessing information supply servers using radio communication.

### BRIEF DESCRIPTION OF THE DRAWINGS

Fig. 1 is a block diagram showing a structure of a conventional car navigation system.
Fig. 2 is a block diagram showing a structure of an embodiment of an integrated guidance system of this invention.
Fig. 3 is a block diagram showing a structure of a mobile terminal apparatus in the integrated guidance system of Fig. 2
Fig. 4 is a diagonal view showing the appearance of the mobile terminal apparatus of Fig. 3.
Fig. 5 is a diagram for the explanation of a menu screen displayed on a liquid crystal display panel of the mobile terminal apparatus.
Fig. 6 is a diagram for the explanation of a submenu screen displayed on the liquid crystal display panel of the mobile terminal apparatus.
Fig. 7 is a diagram for the explanation of a display screen of a retrieval result displayed on the liquid crystal display panel of the mobile terminal apparatus.
Fig. 8 is a flow chart showing an overall processing procedure of the mobile terminal apparatus.
Fig. 9 is a flow chart showing user operation in the overall procedure of Fig. 8.
Fig. 10 is a flow chart showing an overall processing procedure of the navigation server of Fig. 2.
Fig. 11 is a chart showing a structure of a service table in the information schemer held in the navigation server of Fig. 2.
Fig. 12 is a chart showing a structure of a data table in the information schemer held in the navigation server of Fig. 2.
Fig. 13 is a chart showing a structure of a charge data base held in the navigation server of Fig. 2.
Fig. 14 is a timing chart for the explanation of the mobile terminal apparatus of Fig. 2 and a communication sequence of the navigation server.
Fig. 15 is a sketch showing a request menu format which is one of the data formats used for the communication sequence of Fig. 14.
Fig. 16 is a sketch showing a service menu format which is one of the data formats used for the communication sequence of Fig. 14.
Fig. 17 is a sketch showing a retrieval request format which is one of the data format used for communication sequence of Fig. 14.
Fig. 18 is a sketch showing a retrieval result format which is one of the data format used for communication sequence of Fig. 14.

### DESCRIPTION OF THE PREFERRED EMBODIMENTS

Below, suggested embodiments of this invention will be explained while referring to the figures.

### Embodiment 1

Fig. 2 shows the structure of the first embodiment of the integrated guidance system of this invention. In this figure, the position detection section 1 is, for example, a GPS device, the mobile terminal apparatus 2 is a navigation device or a personal computer or electronic notebook, and the secondary memory section 3 is a CD-ROM device. 4 is a radio communication section providing access means from mobile terminal apparatus 2 to a navigation server 5. The radio communication section may be a portable telephone or a two-way message device.

5 is a navigation server replying appropriate information to the request from the mobile terminal apparatus 2. The navigation server 5 is connected to the internet 6 and is provided with individual information from web sites 7,8,9 and the position information which can be obtained from position detection section 1 and the corresponding information table to the position information etc. on the map provided by the secondary memory section 3. Further, the navigation server 5 includes a communication protocol control section 5A, a charge data base 5B, an information schemer 5C, an information selection/conversion section 5D. Further, web site 7,8,9 connected to internet 6 provides traffic information, sightseeing information, local information, etc. of various areas.

Fig. 3 and Fig. 4, which use the same symbols as in Fig. 2 for corresponding parts Fig. 2, respectively show the detailed composition of the device of Fig. 1 and the appearance of the mobile terminal apparatus 2.

In these figures, 4A and 4B are a radio communication device and its antenna for conducting radio communication with the navigation server 5 which transmit a user's infomation request and receive detailed information retrieved by the navigation server 5.

The user inputs information and instructions through a touch panel 10 and, by touching the surface with finger tips or a stylus pen, the coordinate information on the screen is sent to the Central Processing Unit (CPU) 12. 11 is a liquid crystal display panel displaying characters and graphics and shows maps, menus and submenus, etc. as controlled by CPU 12. 1A and 1B are a GPS Unit and an antenna respectively which receive radio waves from GPS satellites and calculate the present absolute position. They measure the latitude and longitude at fixed time intervals and provide the newest position information to the CPU 12. The CPU 12 follows the instruction code written in a program memory 13 and is in charge of the general control of the mobile terminal apparatus 2.

The program memory 13 stores the instruction code carried out by CPU 12 and the necessary data for carrying out the instructions. A data memory 14 is used as a work area for the CPU 12 processing and storing the user's data. 15 is the mobile terminal apparatus 2. A stylus pen 16 is used for inputting through touch panel 10. A CD-ROM device 3 is the secondary memory section used for connecting to mobile terminal device 15. By specifying a latitude and longitude, the map information in the vicinity of a position can be retrieved and read from the CD-ROM device 3. A GPS antenna 1B is connected to the GPS Unit 1A which is inside the mobile terminal device 15.

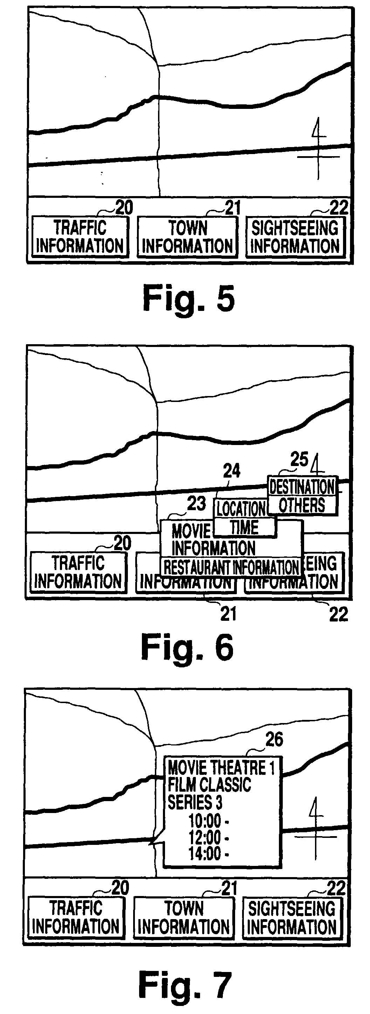

Fig. 5 is an example of the screen to be shown on the liquid crystal display panel 11 of the mobile terminal apparatus 2. In this figure, 20 is a traffic information category selection button, 21 is a town information category selection button, and 22 is a sightseeing category selection button. The actual method of use, for example, is when the user in the car wants to know entertainment facilities such as movies etc., the user makes a selection by touching the town information category selection button 21 on the displaying screen with the stylus pen 16 or with a finger tip. As a result, the area name of the present position and the "town information" are transmitted as the name of a place and a category of request, respectively, to the navigation server 5 from the mobile terminal apparatus 2.

Fig. 6 is an example of the submenu displaying screen of services available when the town information category is selected. For example, in the town information category, movie and restaurant information are available as a service. In the figure, 23 is an information type selection submenu such as movies and restaurants, 24 is a location time setting submenu for setting the location and time, 25 is a detailed conditions setting submenu for selecting destination and setting other details. In reality, when movie information is selected from the information type selection submenu 23, the location time setting submenu 24 is displayd in order to specify more detailed condition of retrieval. If the location is specified here, the service name "movie information" and the parameter showing location etc. are transmitted to the navigation server 5, and at the navigation server 5 side, a retrieval process is carried out.

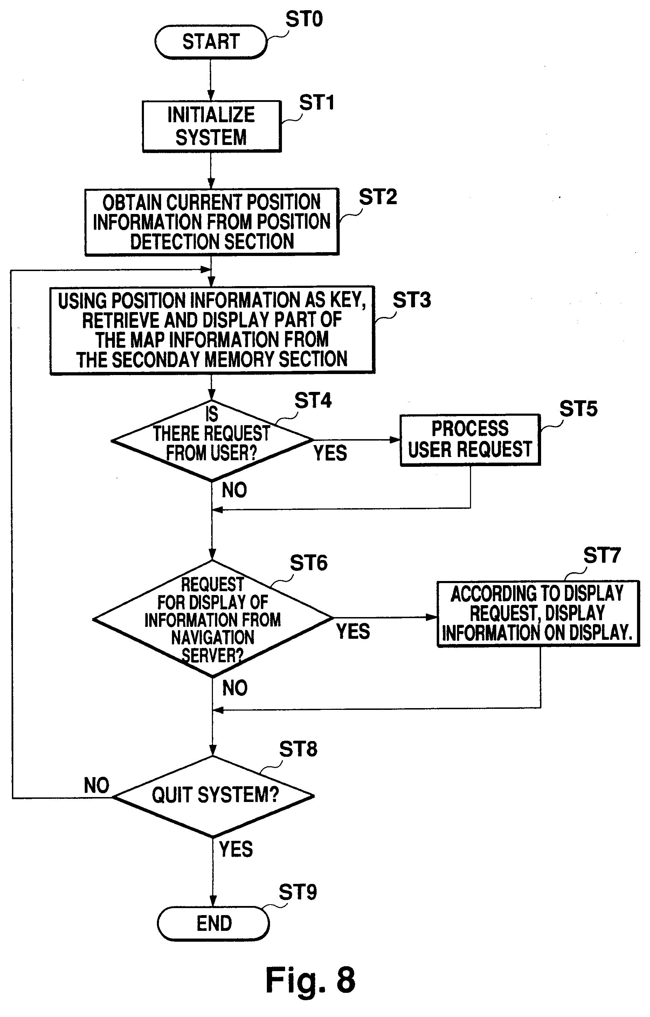

Fig. 7 is an example of the screen displayd on the side of the mobile terminal apparatus 2 according to the retrieval result of the navigation server 5. The result of the retrieval is displayed on a retrieval result display area 26. In this example, movie theaters, movie titles, and a time schedule are displayed. Further, in a box appearing in the retrieval result display area 26, the location of the movie theater is displayed on the map.

The CPU 12 in the mobile terminal device 15 reads the instruction code stored in program memory 13 when power is supplied, and conducts predetermined procedure ST 0 shown in Fig. 8. First CPU 12 conducts initialization of the entire system of the mobile terminal device 15 in step ST1. At this time, the registration of destination is conducted, and, in confirming the present position, the GPS unit 1A gains its present position at fixed time intervals and performs necessary set up so that the newest position information can be obtained by the CPU 12.

Next the CPU 12 reads its absolute position information from the GPS Unit 1A in step ST 2, and, based on the newest position information obtained, reads the map information of the vicinity from CD-ROM device 3 in step ST 3, and displays this information on the liquid crystal display panel 11 as shown in Fig. 6. Following this, CPU 12 waits for the user's request which is input on the touch panel 10 in step ST4. When a user's request is input, the CPU 12 proceeds to step ST5 and conducts the user request processing. In case there is no user request or when the user request processing of step ST5 is finished, the CPU 12 proceeds to step ST6 and watches the information received by the radio communication device 4A and takes an display request from the navigation server 5.

When the display request comes from the navigation server 5, the CPU 12 proceeds to step ST7, and displays information corresponding to the display request on the liquid crystal display panel 11. When this step ST7 is complete, or when there is no display request from the navigation sever 5, the CPU 12 proceeds to step ST8, and decides whether or not to end the whole procedure. If it is not to be ended, the CPU 12 returns to step ST3, and re-starting the processing of retrieving and displaying part of the map information, the CPU 12 repeatedly conducts the process of the above step ST4 (-step ST5) - step ST6 (-step ST7).

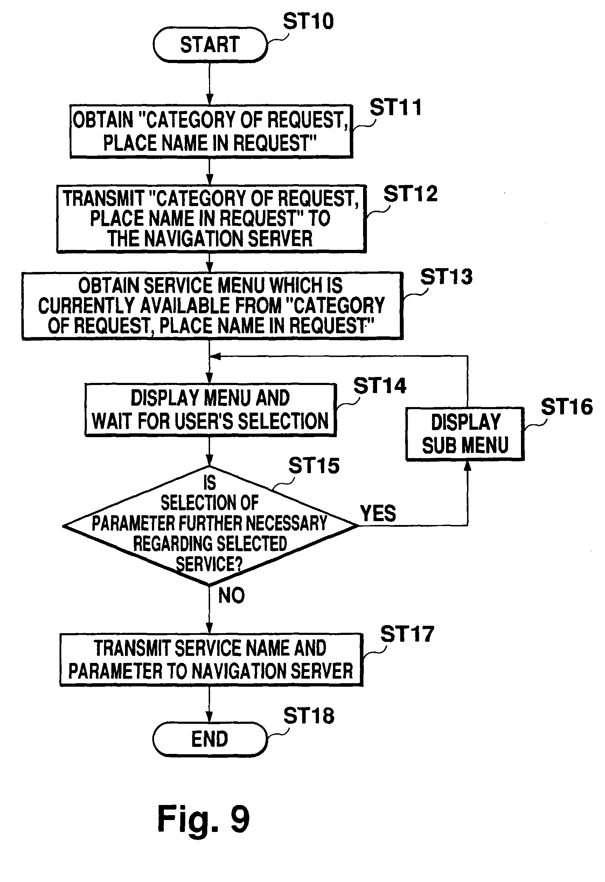

In the above step ST4, when the user inputs a request through the touch panel 10, the CPU 12 detects it and conducts the sub routine of process procedure ST10 shown in Fig. 9 as the user request process of step ST5. The CPU 12 obtains in step ST11 request a category, the place name where the command is issued specified by user input and, in the following step ST12, transmits this data to the navigation server 5.

Next, in step ST13, the CPU 12 obtains the presently available service menu which is obtained based on a category of request, the place name where the command is issued from the navigation server 5 and, in the following step ST14, displays a menu on the liquid crystal display panel 11 and waits for user selection. When the user makes some sort of selection input, the CPU 12 proceeds to the next step ST15 and decides whether or not other parameters must be designated regarding the selected service. Here, in cases where other parameters are necessary, the CPU 12 proceeds to step ST16, displays a submenu, and returns to step ST14. In this way, the CPU 12 receives service menu which is provided from the navigation server 5 following the user's request and hierarchically displays the menus 20, 21, 22 and submenus 23, 24, 25 on the liquid crystal display panel 11, as shown in Fig. 6 and Fig. 7, and enable user selection of information possible.

The CPU 12 repeats the display of the menu and the submenu and receives the selection input from the user until the necessary information is complete.

At that stage, the CPU 12 forwards the information to the navigation server 5 through the radio communication device 4A in step ST17. On the other hand, in cases where the information is sent through the radio communication device 4A from the navigation server 5, the CPU 12 obtains this information and displays it on the liquid crystal display panel 11 as shown in Fig. 8.

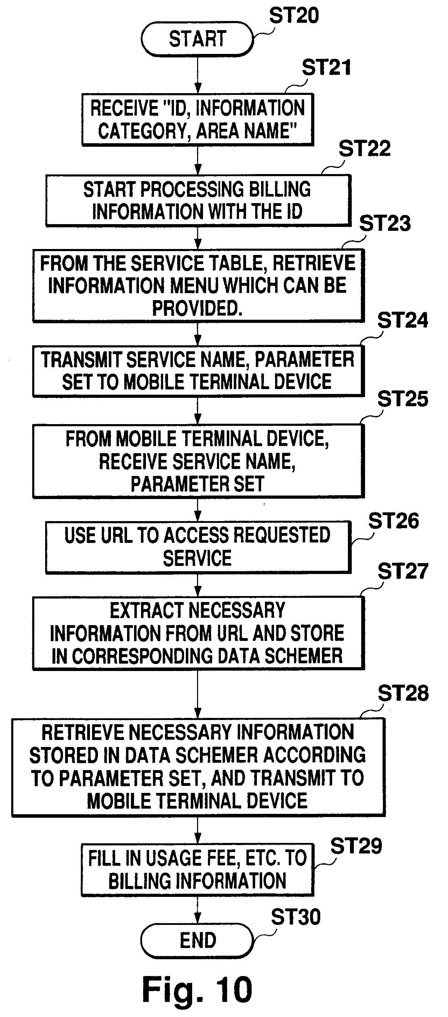

Fig. 10 shows the process procedure ST 20 indicating the operations of the navigation server 5. When the communication protocol control section 5A receives ID, information category, and area information transmitted from mobile terminal apparatus 2 in step ST 21, communication time count starts as billing information process in step ST 22. Further, in the following step ST 23, the retrieval of a service table in the information schemer 5C is conducted making said information category and said area name as search keys. Services which can be provided for mobile terminal apparatus 2 are extracted. In step ST24, according to the result, a list of service names and parameter sets is generated and transmitted to the mobile terminal apparatus 2, where request from the mobile terminal apparatus 2 is awaited.

Next the navigation server 5 receives the specified service name and parameter set transmitted from the mobile terminal apparatus 2 in step ST 25. The navigation server 5 refers to the service table in the information schemer 5C in step ST 26 and, after obtaining URL (Uniform Resource Locators) in response to the service name, the service information described in HTML (Hyper Text Markup Language) is obtained by accessing to Web Site 7,8,or 9 corresponding to URL on the internet 6 through the information selection/conversion section 5D.

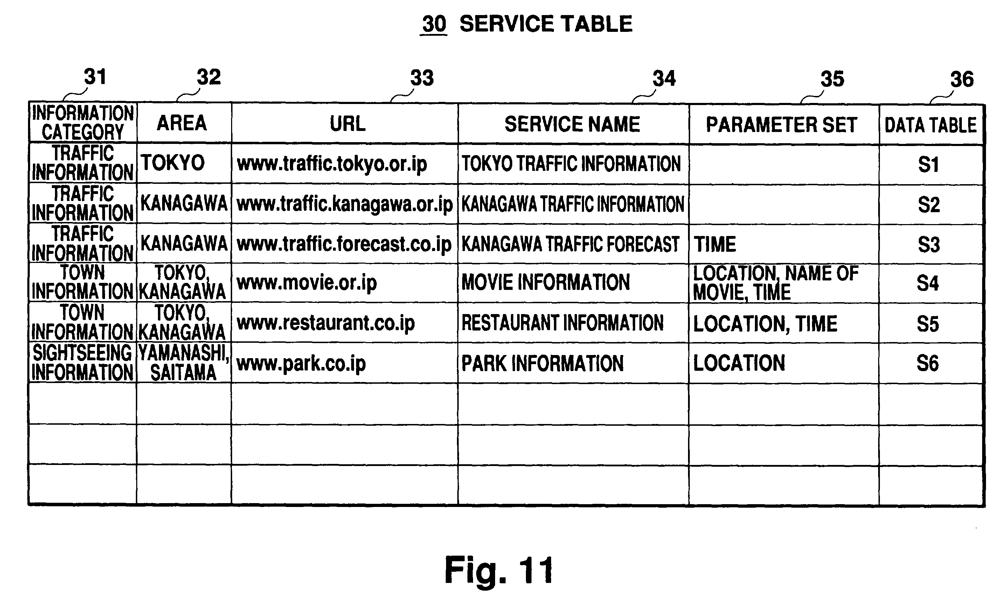

Next in step ST 27, the service information obtained in HTML form is converted by the information selection/conversion section 5D, and is stored as a data table like the one shown in Fig. 11 as an element of the service table. Further, in step ST 28, retrieval is conducted within the data table using the parameter set received at step ST 25 as a search key, and after extracting the information requested by the mobile terminal apparatus 2, the information is transmitted to the mobile terminal apparatus 2. In step ST 29, the information of the service charge counted during the series of operation of ST 21 - ST 27 is input in the charge data base 5B and the whole process is finished.

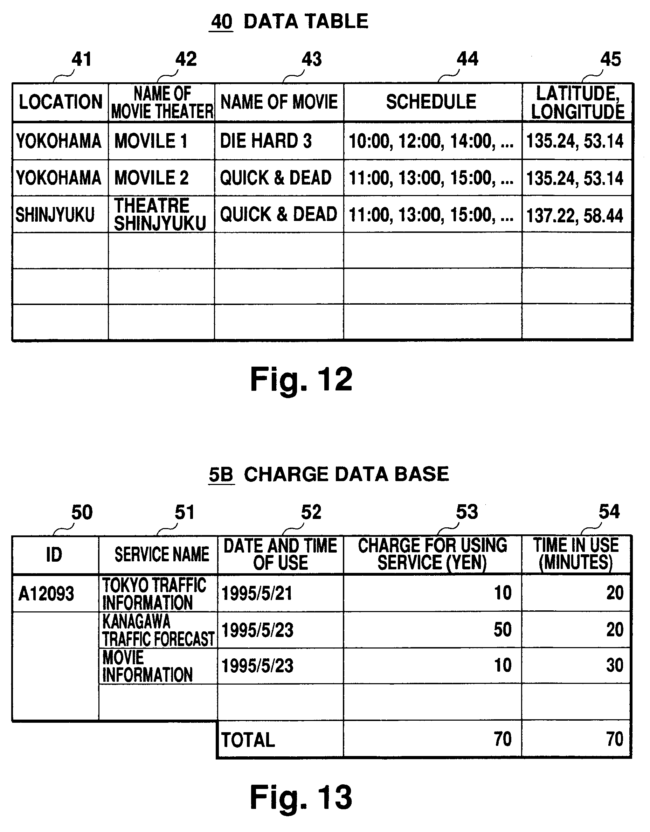

Next, referring to Fig. 11 and Fig. 12, the service table 30 and the data table 40 in the information schemer 5C will be explained using examples. Fig. 11 shows an example of the information stored in the service table 30 in the information schemer 5C incorporated in the navigation server 5. In Fig. 12, 31 is the information category, 32 is the area, 33 is the URL corresponding to each Web Site, 34 is the service name, 35 is the parameter set, and 36 is the data table which stores information obtained from each Web Site.

For example in a case where "town information" is transmitted as the information category, and "Tokyo, Kanagawa" as the area, the navigation server 5 retrieves the service table 30 and extracts services on the 4th and 5th lines which have "town information", "Tokyo, Kanagawa" as elements. Further, the service name 34, and the parameter set 35 are transmitted to the mobile terminal apparatus 2, and are used for display as items of the menu 23, the submenus 24 and 25 which are shown in Fig. 6. Fig. 12 displays an example of the information stored in data table 36 of Fig. 11.

For example, suppose that in the submenu 24 in Fig. 6, "Yokohama" is selected as place name and "Die Hard 3" as movie name, and the data input time is "9:00". Where information on the place name, the movie name, and the time are transmitted from the mobile terminal apparatus 2, the navigation server 5 retrieves the data table 40 and reads out the first line of the data and sends it to the mobile terminal apparatus 2. At this time, information relating to the movie to be shown after "9:00" is selected as useful data.

Fig. 13 shows the content of the charge data base 5B inside the navigation server 5. In the figure, the billing information is of the mobile terminal apparatus 2 with the ID= "A12093". It is possible to obtain the service name 51 referred to in the past according to a request from the navigation server 5 as well as the time of use 52, the charge for using the service 53, and time in use 54. Further it is also possible to obtain the total charge for using that service and the cumulative service use time.

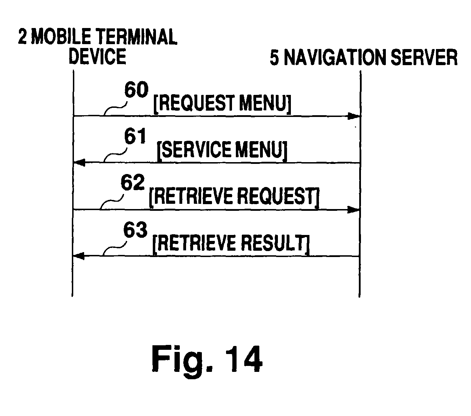

Fig. 14 shows a communication sequence between the mobile terminal apparatus 2 and the navigation server 5. 60 is a request menu which includes, for example, "town information" and "area name". 61 is a service menu which includes services such as "restaurant" or "movie" and submenu data as parameters necessary to retrieve the services. 62 is a retrieval request which includes retrieval keys such as "movie", "Yokohama" and "November 10". 63 is a retrieval result which is composed of title, position, and detailed information.

First, the mobile terminal apparatus 2 sends a request menu 60 to the navigation server 5. In return, the navigation server 5 sends a service menu 61 to the mobile terminal apparatus 2. Next, the mobile terminal apparatus 2 sends a retrieval request 62 selected by a user to the navigation server 5. Finally the navigation server 5 sends a retrieval result 63 to the mobile terminal apparatus 2.

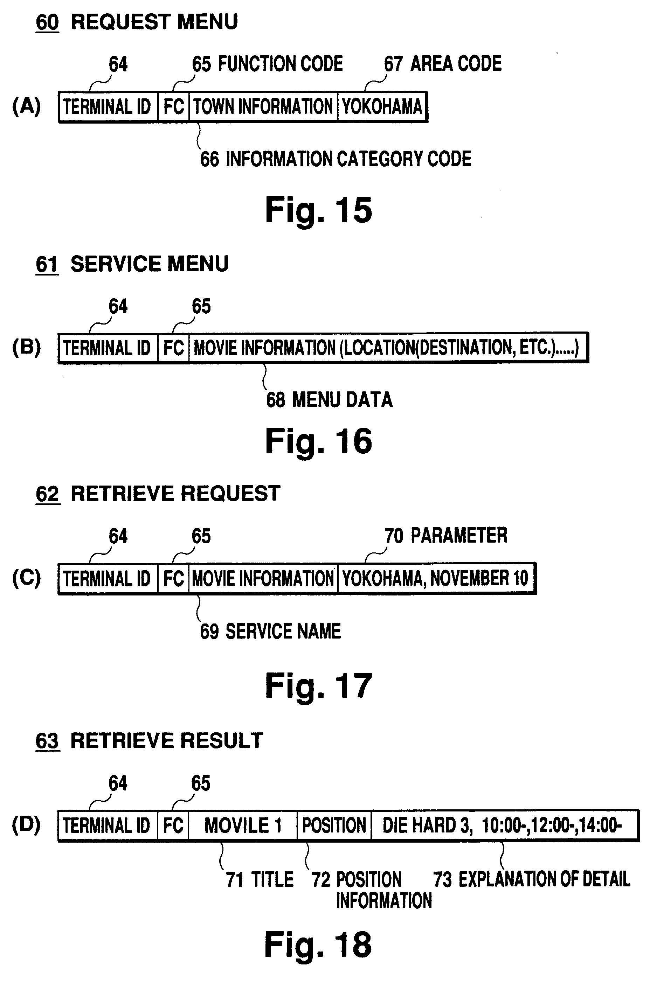

Fig. 15 - 18 show data formats used in the communication sequence between the mobile terminal apparatus 2 and the navigation server 5. In these figures, 64 is a terminal ID which is used to distinguish the mobile terminal apparatus 2. 65 is a function code which shows the type of data format. 66 is an information category code which shows the type of information service such as traffic information, town information, etc. 67 is an area code which shows the target area such as Tokyo, Yokohama, etc. 68 is a menu data which has a hierarchical structure. The hierarchy is shown by parenthesis.

69 is a service category such as movie information. A parameter 70 such as Yokohama or November 10, a title of information 71, a positional information 72 and a detailed explanation of the information 73, are all obtained by retrieval. The request menu 60 is composed of the terminal ID 64, the function code 65, the information category code 66 and the area code 67 (Fig. 15). The service menu 61 is composed of the terminal ID 64, the function code 65, the menu data 68 (Fig. 16). The retrieval request 62 is composed of the terminal ID 64, the function code 65, the service name 69 and the paramater 70 (Fig.17). The retrieval result 63 is composed of the terminal ID 64, the function code 65, the title 71, the position information 72 and the detailed explanation 73.

## Claims

1. An integrated guidance system comprising:
a mobile terminal apparatus (2) having a position detection section (1) for detecting present position thereof; a secondary memory section (3) for storing map information; a radio communication section (4) for conducting radio communication; and a display section (11) for displaying various information including the map information; and
a navigation server (5) connected to a network (6), having a radio communication control section (5A) for conducting radio communication with the radio communication section (4) of the mobile terminal apparatus, wherein
the navigation server (5) collects necessary guidance information while accessing information supply servers (7, 8, 9) connected to the network, based on a communication result with the mobile terminal apparatus and sends the guidance information collected to the mobile terminal apparatus, and
the mobile terminal apparatus displays the guidance information sent from the navigation server on the display section along with a corresponding map information read from the secondary memory section.

2. An integrated guidance system according to claim 1, wherein
the navigation server (5) comprises a charge data base (5B) for holding an access record for every user so as to accumulate charges for respective accesses and centrally manage billing information on behalf of the information supply servers.

3. An integrated guidance system according to either claim 1 or 2, wherein
the navigation server (5) comprises an information selection section (5D) for selecting information necessary for the mobile terminal apparatus from among guidance information supplied by the information supply servers and sends the information selected to the mobile terminal apparatus.

4. An integrated guidance system according to any of the claims 1 - 3, wherein
the mobile terminal apparatus (2) transmits, upon a user request for guidance information, a category of the user request and a place where the user request is made to the navigation server (5).

5. An integrated guidance system according to any of the claims 1 - 4, wherein
the navigation server (5) informs the mobile terminal apparatus (2) of currently available services, upon receipt of a request for guidance information from the mobile terminal apparatus (2).

6. An integrated guidance system according to claim 4, wherein
the navigation server (5) informs the mobile terminal apparatus (2) of currently available services, based on the category of the user request and the place where the user request is made to the navigation server (5).

7. An integrated guidance system according to claim 5, wherein
the mobile terminal apparatus (2) displays sub-menus (23, 24, 25) of the currently available services obtained by the navigation server (5) if details need to be specified as to the services, the sub-menus (23, 24, 25) including detailed items of service content.

8. An integrated guidance system according to any of the claims 1 - 7, wherein
the navigation server (5) manages billing information for the mobile terminal apparatus (2) by referring to an ID of the mobile terminal apparatus (2).

9. An integrated guidance system according to any of the claims 1 - 8, wherein
the navigation server (5) selects, upon a request for guidance information from the mobile terminal apparatus (2), effective information, based on a time when the request is made and sends the information selected to the mobile terminal apparatus (2).

10. A mobile terminal apparatus (2) comprising:
a position detection section (1) for detecting present position thereof; a secondary memory section (3) for storing map information; a radio communication section (4) for conducting radio communication; and a display section (11) for displaying various information including the map information, wherein
the mobile terminal apparatus (2) obtains desired guidance information through radio communication via the radio communication section (4) with a server apparatus (5) and displays the guidance information obtained on the display section (11) along with a corresponding map information, the server apparatus (5) being connected to a network (6) with access to various guidance information.
